# EUROPÄISCHE PATENTSCHRIFT

(11) **EP 1 029 774 B1**
(45) Veröffentlichungstag und Bekanntmachung des Hinweises auf die Patenterteilung: **16.06.2004**
(21) Anmeldenummer: 00102358.9
(22) Anmeldetag: 04.02.2000
(51) Int. Cl.: B62D 65/00

(54) **In Fertigungslinien für Kraftfahrzeuge einsetzbare Spannvorrichtung und Fertigungslinie mit einer solchen Spannvorrichtung**
Clamping device for use in production lines for motor vehicles and production line with such a clamping device
Dispositif de serrage pour l'utilisation dans des lignes de production de véhicules automobiles et ligne de production avec un tel dispositif de serrage

(30) Priorität: 18.02.1999 DE 19907015
(43) Veröffentlichungstag der Anmeldung: 23.08.2000
(73) Patentinhaber: EDAG Engineering + Design Aktiengesellschaft, 36039 Fulda (DE)
(72) Erfinder: Otterbein, Wilhelm, 36364 Bad Salzschlirf (DE); Hahl, Manfred, 36163 Poppenhausen (DE)
(74) Vertreter: Hebing, Norbert

(56) Entgegenhaltungen:
- DE-A- 2 810 822
- DE-A- 3 823 947
- DE-A- 19 533 389
- DE-A- 19 806 963
- DE-A- 19 818 304
- US-A- 4 682 722

## Beschreibung

Die Erfindung betrifft eine in Fertigungslinien für Kraftfahrzeuge einsetzbare Transportvorrichtung mit einer in Richtung der Fertigungslinie verfahrbaren Spannvorrichtung für eine auf der Transportvorrichtung in Richtung der Fertigungslinie verfahrbare Rohkarosse, welche zu beiden Seiten der Fertigungslinie Seitenteile und über die Rohkarosse greifende Querträger mit Spannkörpern zum Spannen der Rohkarosse aufweist und bei der die Querträger in Arbeitsstellung durch eine Verriegelung zu einem die Rohkarosse überbrückenden Bauteil miteinander zu kuppeln sind. Weiterhin betrifft die Erfindung eine Fertigungslinie mit einer solchen Spannvorrichtung.

Eine Transportvorrichtung mit einer Spannvorrichtung der vorstehenden Art ist Gegenstand der DE 195 33 389 A1. Ebenso beschreibt diese Schrift eine Fertigungslinie mit einer Spannvorrichtung. Bei der bekannten Spannvorrichtung ist ein als Ganzes verfahrbarer Grundrahmen vorgesehen, auf welchem die Seitenteile angeordnet sind. Die Transportvorrichtung für die Rohkarossen ist verfahrbar auf dem Grundrahmen angeordnet. Insgesamt hat die Spannvorrichtung zwei hintereinander angeordnete Grundrahmen mit Seitenteilen, welche verschieden gestaltete Spannkörper tragen, so dass in der Fertigungslinie zum Schweißen von zwei verschiedenen Rohkarossen wahlweise die eine oder andere Spannvorrichtung benutzt werden kann.

Zum Stand der Technik gehört auch die DE 28 10 822 A1. Diese beschreibt eine Schweißstation für Fahrzeugkarosserien, bei der an die zu schweißenden Karosserien angepasste Seitenteile - dort Seitengestelle genannt - schwenkbar in oberhalb der Karosserie verlaufenden Führungen gehalten werden. Sobald eine Karosserie einer bestimmten Art in die Schweißstation eingefahren werden soll, werden zunächst dazu passende Seitenteile über die Führung in die Schweißstation eingefahren. Wenn sich die Karosserie in der Station befindet, werden die Seitenteile nach innen geschwenkt, wodurch sie mit der Karosserie in Eingriff treten und damit deren endgültige Geometrie festlegen. Die Führungen erlauben somit die Bereitstellung unterschiedlicher Seitenteile für verschiedene Arten von Karosserien.

Dies ist ein Beispiel für den in der Kraftfahrzeugindus trie vorhandenen Wunsch, in einer Fertigungslinie mehr als zwei verschiedene Fahrzeugmodelle mit möglichst geringem Umrüstaufwand rasch hintereinander zu fertigen. Das bereitet jedoch bei Verwendung der durch die genannte DE 195 33 389 A1 bekannten Spannvorrichtung Schwierigkeiten, weil eine Anordnung von mehr als zwei unterschiedlichen Spannvorrichtungen hintereinander meist räumlich nicht möglich ist und zu unerwünscht hohen Verlustzeiten beim Transport der Rohkarossen von einer Spannvorrichtung zur anderen führen würde. Ein Auswechseln der Spannvorrichtungen ist zwangsläufig mit einem längeren Stillstand der Fertigungslinie verbunden, weil dieser nicht ohne eine gleichzeitige Demontage der von der Spannvorrichtung umschlossenen Transportvorrichtung möglich ist.

Der Erfindung liegt das Problem zugrunde, eine Spannvorrichtung der eingangs genannten Art so auszubilden, dass eine möglichst rasche Anpassung an unterschiedliche Rohkarosserietypen möglich ist. Weiterhin soll eine Fertigungslinie mit einer solchen Spannvorrichtung geschaffen werden, die einen möglichst raschen Wechsel zwischen unterschiedlichen Rohkarosserietypen erlaubt.

Das erstgenannte Problem wird erfindungsgemäß dadurch gelöst, dass auf beiden Seiten der Transportvorrichtung auf einem gemeinsamen, unterhalb der Transportvorrichtung führenden Grundrahmen Fahrwege für jeweils einen auf einer Seite der Transportvorrichtung separat verfahrbaren Seitenwagen der Spannvorrichtung gebildet sind, dass der Seitenwagen nur die Seitenteile einer Seite der Transportvorrichtung trägt und dass Klemmmittel zum Verbinden der Seitenwagen mit dem Grundrahmen vorgesehen sind.

Durch diese erfindungsgemäße Trennung der Seitenteile und damit auch der Spannkörper der beiden Seiten der Fertigungslinie voneinander kann man ohne Demontage der Transportvorrichtung der Fertigungslinie die Seitenwagen mit den jeweiligen Seitenteilen und Spannkörpern von der Fertigungslinie entfernen und gegen Seitenwagen mit anderen Spannkörpern austauschen, wenn sich die zu schweißende Rohkarosse ändert und deshalb anders gespannt werden muss. Da die beiden Fahrwege der Seitenwagen auf einem gemeinsamen Grundrahmen angeordnet sind und die Seitenwagen durch Klemmmittel fest mit dem jeweiligen Rollenträger und damit auch dem Grundrahmen zu verbinden sind, entsteht genau wie bei der bekannten, eine Einheit bildenden Vorrichtung beim Arbeiten der erfindungsgemäßen Spannvorrichtung ein geschlossener, die Rohkarosse umschließender Rahmen, so dass sich eine hohe Steifigkeit und damit hohe Fertigungsgenauigkeit ergibt.

Die Fahrwege können unterschiedlich gestaltet sein. Man kann auf hierfür bei Fertigungslinien bewährte Bauteile zurückgreifen, wenn die Fahrwege durch mit Abstand hintereinander angeordnete, fest mit dem Grundrahmen verbundene Rollenträger mit drehbar gelagerten Laufrollen gebildet sind, auf denen der jeweilige Seitenwagen mit einem Tragrahmen abgestützt ist.

Die Klemmmittel sollen einen Kraftschluss zwischen dem Grundrahmen und den Seitenwagen herstellen. Das lässt sich auf besonders einfache Weise verwirklichen, wenn gemäß einer anderen Weiterbildung der Erfindung die Klemmmittel an beiden Seiten des Rollenträgers angeordnet und zum Einspannen des Tragrahmens innerhalb des Rollenträgers ausgebildet sind.

Zum Einfahren einer Rohkarosse in die erfindungsgemäße Spannvorrichtung kann diese mit geringem Aufwand in eine Offenstellung bewegt werden, in welcher die Spannkörper ausreichend Abstand von der Rohkarosse haben, wenn gemäß einer anderen Weiterbildung der Erfindung die Seitenteile mit dem jeweiligen Querträger jeweils um eine parallel zur Fertigungslinie horizontal verlaufende Achse von der Fertigungslinie weg nach außen schwenkbar mit dem Tragrahmen verbunden sind.

Mit dem Auswechseln der Seitenwagen werden sämtliche Spannkörper zugleich ausgewechselt, wenn gemäß einer anderen Weiterbildung der Erfindung die Seitenwagen sämtliche Spannkörper für die Rohkarosse einschließlich der Unterspanner aufweisen.

Das zweitgenannte Problem, nämlich die Schaffung einer Fertigungslinie mit der zuvor beschriebenen Spannvorrichtung wird erfindungsgemäß dadurch gelöst, dass an jeder Seite der Fertigungslinie zumindest ein Stellplatz für einen zusätzlichen Seitenwagen eines Seitenwagenpaares für eine weitere Rohkarossenvariante vorgesehen ist und wenn die Fertigungslinie Mittel zum Austausch der Seitenwagen aufweist. Eine solche Fertigungslinie erlaubt den Austausch einer kompletten Spannvorrichtung durch Verfahren der beiden Seitenwagen, ohne dass hierzu die Transportvorrichtung der Fertigungslinie aufgetrennt werden muss. Deshalb ist ein solcher Wechsel sehr rasch möglich, so dass auf einer Fertigungslinie rasch hintereinander unterschiedliche Typen von Rohkarossen gefertigt werden können.

Mit einer erfindungsgemäßen Fertigungslinie kann durch Nutzung des seitlich der Fertigungslinie zur Verfügung stehenden Platzes eine große Zahl unterschiedlicher Typen von Rohkarossen bearbeitet werden, ohne dass die Schweißroboter den Austausch der Seitenwagen behindern, wenn vor und hinter einer Schweißstation der Fertigungslinie quer zur Fertigungslinie nebeneinander mehrere Stellplätze für jeweils einen Seitenwagen vorgesehen sind und wenn zum Austausch von Seitenwagen auf jeder Seite der Fertigungslinie ein Transportweg hinter Schweißrobotern der Schweißstation von den Stellplätzen vor der Schweißstation zu den Stellplätzen hinter der Schweißstation führt.

Von jeder Seite der Fertigungslinie können Schweißroboter bis unmittelbar vor die Rohkarosse fahren, ohne dass hierbei der Fahrweg der Seitenwagen im Wege steht, wenn gemäß einer anderen Weiterbildung der Erfindung jeweils ein Schweißroboter einer Seite der Fertigungslinie zum Einfahren in den Fahrweg der Seitenwagen entlang der Fertigungslinie zwischen den Rollenträgern ausgebildet ist.

Die Erfindung lässt verschiedene Ausführungsformen zu. Zur weiteren Verdeutlichung ihres Grundprinzips ist eine davon schematisch in der Zeichnung dargestellt und wird nachfolgend beschrieben. Die Zeichnung zeigt in
- Fig.1: eine Vorderansicht einer Spannvorrichtung nach der Erfindung in Spannstellung,
- Fig.2: eine Draufsicht auf einen für die Erfindung wesentlichen Teilbereich einer Fertigungslinie.

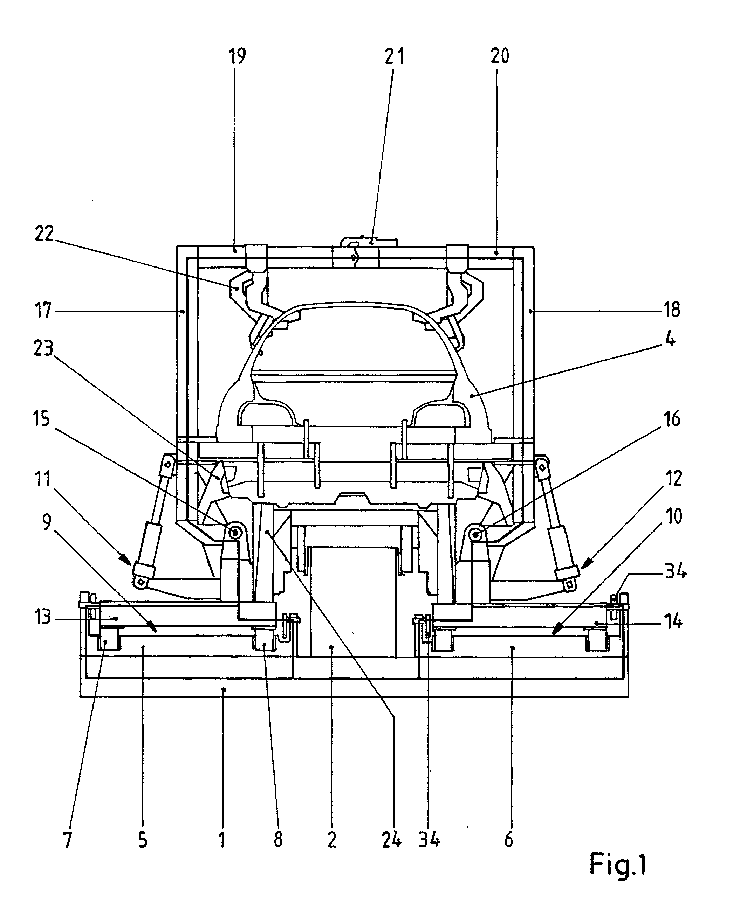

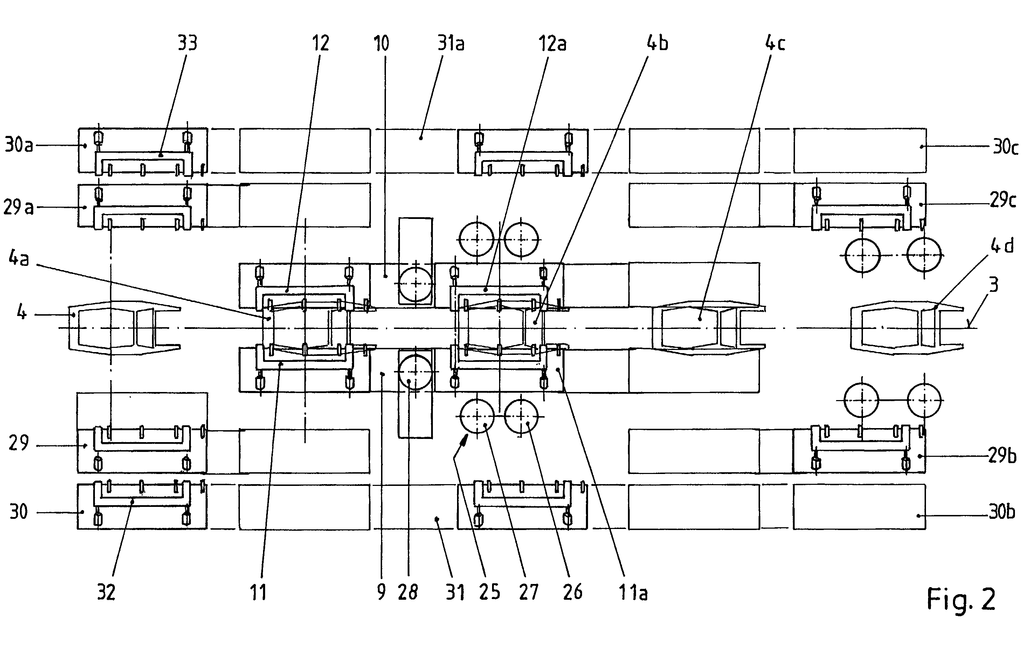

Die Figur 1 zeigt einen Grundrahmen 1, auf dem eine Transportvorrichtung 2 einer in Figur 2 gezeigten Fertigungslinie 3 angeordnet ist. Diese Transportvorrichtung 2 dient zum Transport von Rohkarossen 4. Auf dem Grundrahmen 1 sind zu beiden Seiten der Transportvorrichtung 2 Rollenträger 5, 6 mit Laufrollen 7, 8 fest angeordnet. Mehrere solcher hintereinander positionierter Rollenträger 5, 6 bilden zusammen jeweils einen parallel zu der Transportvorrichtung 2 verlaufenden Fahrweg 9, 10 für einen Seitenwagen 11, 12. Jeder Seitenwagen 11, 12 hat einen sich auf den Laufrollen 7, 8 abstützenden Tragrahmen 13, 14. Auf den Tragrahmen 13, 14 sind jeweils um eine horizontale Achse 15, 16 verschwenkbar Seitenteile 17, 18 mit Querträgern 19, 20 befestigt. In Arbeitsposition sind die beiden Querträger 19, 20 durch eine Verriegelung 21 fest miteinander verbunden. Bei geöffneter Verriegelung 21 können beide Seitenteile 17, 18 um die jeweilige Achse 15, 16 nach außen schwenken und dadurch die Rohkarosse 4 freigeben. Die Seitenteile 17, 18 und Querträger 19, 20 tragen Spannkörper 22, 23 für die Rohkarosse. Als Unterspanner 24 ausgebildete Spannkörper sind ebenfalls auf den Seitenwagen 11, 12 vorgesehen. Klemmmittel 34 dienen dazu, die Tragrahmen 13, 14 in den Rollenträgern 5, 6 zu klemmen, wenn sich die Seitenwagen 11, 12 in Arbeitsstellung befinden. Hierzu stützen sich die Klemmmittel 34 bei Druckbeaufschlagung gegen eine Seitenfläche der Tragrahmen und gegen den jeweiligen Rollenträger 5, 6 ab.

In der Figur 2 erkennt man in der Fertigungslinie 3 die Rohkarossen 4, 4a, 4b, 4c und 4d. Dabei befindet sich die Rohkarosse 4b in einer Schweißstation 25, die auf jeder Seite der Fertigungslinie 3 insgesamt drei Schweißroboter 26, 27, 28 hat. Ebenfalls erkennbar sind in Figur 2 unmittelbar neben der Fertigungslinie 3 auf jeder Seite zwei Seitenwagen 11, 12 und 11a, 12a, durch welche jeweils eine Rohkarosse 4a, 4b gespannt wird. Die Seitenwagen 11, 12; 11a und 12a sind auf den Fahrwegen 9, 10 parallel zur Fertigungslinie 3 verfahrbar. Der Schweißroboter 28 und der gegenüberliegende, nicht positionierte Schweißroboter ist in den Fahrweg 9 bzw. 10 eingefahren, um eine möglichst nahe zur Rohkarosse 4b liegende Position einzunehmen.

Seitlich versetzt zur Fertigungslinie 3 und zu den Seitenwagen 11, 12, 11a, 12a sind vor und hinter der Schweißstation 25 Stellplätze 29, 30, 29a, 30a, 30b, 29b, 29c, 30c für weitere Seitenwagen 31, 32 vorgesehen. Die Stellplätze 30, 30b und 30a, 30c mit dem größten Querabstand zur Fertigungslinie 3 sind jeweils durch einen hinter den Robotern 26, 27, 28 verlaufenden Transportweg 31, 31a miteinander verbunden. Dadurch wird es möglich, sämtliche Seitenwagen 32, 11, 11a; 33, 12, 12a jeweils einer Seite gegeneinander auszutauschen, wozu zusätzlich zu den Transportwegen 31, 31a eine Querverfahrbarkeit zwischen den Stellplätzen 29, 30, 29a, 30a, 30b, 29b, 29c, 30c geschaffen sein muss.

### Bezugszeichenliste

- 1: Grundrahmen
- 2: Transportvorrichtung
- 3: Fertigungslinie
- 4: Rohkarosse
- 5: Rollenträger

- 6: Rollenträger
- 7: Laufrolle
- 8: Laufrolle
- 9: Fahrweg
- 10: Fahrweg

- 11: Seitenwagen
- 12: Seitenwagen
- 13: Tragrahmen
- 14: Tragrahmen
- 15: Achse

- 16: Achse
- 17: Seitenteil
- 18: Seitenteil
- 19: Querträger
- 20: Querträger

- 21: Verriegelung
- 22: Spannkörper
- 23: Spannkörper
- 24: Unterspanner
- 25: Schweißstation

- 26: Schweißroboter
- 27: Schweißroboter
- 28: Schweißroboter
- 29: Stellplatz
- 30: Stellplatz

- 31: Transportweg
- 32: Seitenwagen
- 33: Seitenwagen
- 34: Klemmmittel

## Patentansprüche

1. In Fertigungslinien (3) für Kraftfahrzeuge einsetzbare Transportvorrichtung (2) mit einer in Richtung der Fertigungslinie (3) verfahrbaren Spannvorrichtung für eine in Richtung der Fertigungslinie (3) verfahrbare Rohkarosse (4), welche zu beiden Seiten der Fertigungslinie Seitenteile (17, 18) und über die Rohkarosse (4) greifende Querträger (19, 20) mit Spannkörpern (22, 23) zum Spannen der Rohkarosse (4) aufweist und bei der die Querträger (19, 20) in Arbeitsstellung durch eine Verriegelung zu einem die Rohkarosse (4) überbrückenden Bauteil miteinander zu kuppeln sind, **dadurch gekennzeichnet, dass** auf beiden Seiten der Transportvorrichtung (2) auf einem gemeinsamen, unterhalb der Transportvorrichtung (2) führenden Grundrahmen (1) Fahrwege (9, 10) für jeweils einen auf einer Seite der Transportvorrichtung (2) separat verfahrbaren Seitenwagen (11, 12) der Spannvorrichtung gebildet sind, dass der Seitenwagen (11, 12) nur die Seitenteile (17, 18) einer Seite der Transportvorrichtung (2) trägt und dass Klemmmittel (34) zum Verbinden der Seitenwagen (11, 12) mit dem Grundrahmen (1) vorgesehen sind.

2. Transportvorrichtung nach Anspruch 1, **dadurch gekennzeichnet, dass** die Fahrwege (9, 10) durch mit Abstand hintereinander angeordnete, fest mit dem Grundrahmen (1) verbundene Rollenträger (5, 6) mit drehbar gelagerten Laufrollen (7, 8) gebildet sind, auf denen der jeweilige Seitenwagen (11, 12) mit einem Tragrahmen (13, 14) abgestützt ist.

3. Transportvorrichtung nach Anspruch 2, **dadurch gekennzeichnet, dass** die Klemmmittel an beiden Seiten des Rollenträgers angeordnet und zum Einspannen des Tragrahmens (13, 14) innerhalb des Rollenträgers (5, 6) ausgebildet sind.

4. Transportvorrichtung nach zumindest einem der vorangehenden Ansprüche, **dadurch gekennzeichnet, dass** die Seitenteile (17, 18) mit dem jeweiligen Querträger (19, 20) jeweils um eine parallel zur Fertigungslinie horizontal verlaufende Achse (15, 16) von der Fertigungslinie weg nach außen schwenkbar mit dem Tragrahmen (13, 14) verbunden sind.

5. Transportvorrichtung nach zumindest einem der vorangehenden Ansprüche, **dadurch gekennzeichnet, dass** die Seitenwagen (11, 12) sämtliche Spannkörper (22, 23) für die Rohkarosse (4) einschließlich der Unterspanner (24) aufweisen.

6. Fertigungslinie mit einer Transportvorrichtung nach zumindest einem der vorangehenden Ansprüche, bei der hintereinander zwei komplette Spannvorrichtungen für zwei unterschiedliche Rohkarossen angeordnet sind, **dadurch gekennzeichnet, dass** an jeder Seite der Fertigungslinie (3) zumindest ein Stellplatz (29, 30; 29a, 30a; (29b, 30b; 29c, 30c)) für einen zusätzlichen Seitenwagen (32, 33) eines Seitenwagenpaares für eine weitere Rohkarossenvariante vorgesehen ist und dass die Fertigungslinie (3) Mittel zum Austausch der Seitenwagen (11, 12, 11a, 12a, 32, 33) aufweist.

7. Fertigungslinie nach Anspruch 6, **dadurch gekennzeichnet, dass** vor und hinter einer Schweißstation (25) der Fertigungslinie (3) quer zur Fertigungslinie (3) nebeneinander mehrere Stellplätze (29, 30; 29a, 30a) für jeweils einen Seitenwagen (11, 12) vorgesehen sind und dass zum Austausch von Seitenwagen (11, 12) auf jeder Seite der Fertigungslinie (3) ein Transportweg (31, 31a) hinter Schweißrobotern (26, 27, 28) der Schweißstation (25) von den Stellplätzen (29, 30; 29a, 30a) vor der Schweißstation (25) zu den Stellplätzen (29b, 30b; 29c, 30c) hinter der Schweißstation (25) führt.

8. Fertigungslinie nach zumindest einem der Ansprüche 6 oder 7, **dadurch gekennzeichnet, dass** jeweils ein Schweißroboter (28) einer Seite der Fertigungslinie (3) zum Einfahren in den Fahrweg (9, 10) der Seitenwagen (11, 12, 11a, 12a) entlang der Fertigungslinie (3) zwischen den Rollenträgern (5, 6) ausgebildet ist.

## Claims

1. A transport device (2) usable in production lines (3) for motor vehicles, with a clamping device traversable in the direction of the production line (3) for a car body (4) traversable in the direction of the production line (3), the clamping device having, on both sides of the production line, side parts (17, 18) and cross arms (19, 20) with clamping bodies (22, 23) for clamping the car body (4), said cross arms reaching over the car body (4), whereby the cross arms (19, 20) are to be coupled together in a working position by an interlocking device to form a component bridging the car body (4), **characterised in that** on both sides of the transport device (2), on a common basic frame (1) running beneath the transport device (2), paths for travel (9, 10) are formed respectively for a side carriage (11, 12) of the clamping device, each of the said side carriages being separately traversable on its side of the transport device (2), that the side carriage (11, 12) carries only the side parts (17, 18) of one side of the transport device (2) and that clamping means (34) are provided for connecting the side carriages (11, 12) to the basic frame (1).

2. The transport device according to claim 1, **characterised in that** the paths for travel (9, 10) are formed by roller carriers (5, 6) with rotatably mounted running-rollers (7, 8), said roller carriers being connected rigidly to the basic frame (1) and arranged at a distance one behind the other, on which roller carriers the respective side carriage (11, 12) is supported with a bearing frame (13, 14).

3. The transport device according to claim 2, **characterised in that** the clamping means are arranged on both sides of the roller carrier and are designed for clamping the bearing frame (13, 14) inside the roller carrier (5, 6).

4. The transport device according to at least one of the preceding claims, **characterised in that** the side parts (17, 18) with the respective cross arms (19, 20) are each connected to the bearing frame (13, 14) in such a way as to be swivellable outwards away from the production line about a shaft (15, 16) running horizontally parallel to the production line.

5. The transport device according to at least one of the preceding claims, **characterised in that** the side carriages (11, 12) have all the clamping bodies (22, 23) for the car body (4) including the lower clamping jack (24).

6. A production line with a transport device according to at least one of the preceding claims, in which two complete clamping devices for two different car bodies are arranged one behind the other, **characterised in that** on each side of the production line (3), at least one parking place (29, 30; 29a, 30a; (29b, 30b; 29c, 30c)) is provided for an additional side carriage (32, 33) of a side-carriage pair for a further car body variant and that the production line (3) has means for exchanging the side carriages (11, 12, 11a, 12a, 32, 33).

7. The production line according to claim 6, **characterised in that**, before and after a welding station (25) of the production line (3), there are provided at right angles to the production line (3) several parking places (29, 30; 29a, 30a) beside one another each for a side carriage (11, 12) and that, for the purpose of exchanging the side carriages (11, 12) on each side of the production line (3), a path for travel (31, 31a) runs behind welding robots (26, 27, 28) of the welding station (25) from the parking places (29, 30; 29a, 30a) before the welding station (25) to the parking places (29b, 30b; 29c, 30c) after the welding station (25).

8. The production line according to at least one of claims 6 or 7, **characterised in that** a welding robot (28) on each side of the production line (3) is designed for running into the path for travel (9, 10) of the side carriages (11, 12, 11a, 12a) along the production line (3) between the roller carriers (5, 6).

## Revendications

1. Dispositif de transport (2) pouvant être utilisé dans des chaînes de fabrication (3) pour véhicules automobiles, comprenant un dispositif de serrage qui peut se déplacer selon la direction de la chaîne de fabrication (3) pour une carrosserie brute (4) pouvant se déplacer sur le dispositif de transport selon la direction de la chaîne de fabrication (3) et qui présente des parties latérales (17, 18) des deux côtés de la chaîne de fabrication et des poutres transversales qui s'étendent au-dessus de la carrosserie brute et sont munies de corps de serrage pour serrer la carrosserie brute, et dans lequel les poutres transversales (19, 20) doivent être accouplées entre elles dans la position de travail par un verrouillage pour former un élément qui chevauche la carrosserie brute (4), **caractérisé en ce que**, sur les deux côtés du dispositif de transport (2) sont formées, sur un châssis de base (1) commun qui passe au-dessous du dispositif de transport (2), des voies de circulation (9, 10) prévues chacune pour un chariot latéral (11, 12) du dispositif de serrage qui peut se déplacer séparément sur un côté du dispositif de transport (2), **en ce que** le chariot latéral (11, 12) porte uniquement les parties latérales (17, 18) d'un côté du dispositif de transport (2) et **en ce qu'**il est prévu des moyens de blocage (34) servant à assembler les chariots latéraux (11, 12) au châssis de base (1).

2. Dispositif de transport selon la revendication 1, **caractérisé en ce que** les voies de circulation (9, 10) sont formées par des supports de galets (5, 6) munis de galets de roulement (7, 8) montés rotatifs, qui sont disposés à un certain écartement l'un à la suite de l'autre et reliés rigidement au châssis de base (1) et sur lesquels le chariot latéral (11, 12) correspondant prend appui par un châssis porteur (13, 14).

3. Dispositif de transport selon la revendication 2, **caractérisé en ce que** les moyens de blocage sont disposés des deux côtés du support de galets et réalisés pour serrer le châssis porteur (13, 14) à l'intérieur du support de galets (5, 6).

4. Dispositif de transport selon au moins une des revendications précédentes, **caractérisé en ce que** les parties latérales (17, 18), avec la poutre transversale correspondante (19, 20) sont reliées au châssis porteur (13, 14) de manière à pouvoir pivoter vers l'extérieur, dans le sens qui s'éloigne de la chaîne de fabrication, autour d'un axe (15, 16) s'étendant horizontalement, parallèlement à la chaîne de fabrication.

5. Dispositif de transport selon au moins une des revendications précédentes, **caractérisé en ce que** les chariots latéraux (11, 12) présentent tous les corps de serrage (22, 23) pour la carrosserie brute (4), y compris le tirant inférieur (24).

6. Chaîne de fabrication équipée d'un dispositif de transport selon au moins une des revendications précédentes, dans lequel deux dispositifs de serrage complets prévus pour deux carrosseries brutes différentes sont disposés l'un derrière l'autre, **caractérisée en ce que**, de chaque côté de la chaîne de fabrication (3), est prévu au moins un emplacement d'arrêt (29, 30, 29a, 30a ; (29b, 30b ; 29c, 30c)) pour un chariot latéral supplémentaire (32, 33) appartenant à une paire de chariots latéraux pour une autre variante de carrosserie brute et **en ce que** la chaîne de fabrication (3) présente des moyens pour l'échange des chariots latéraux (11, 12, 11a, 12a, 32, 33).

7. Chaîne de fabrication selon la revendication 6, **caractérisée en ce qu'**il est prévu, en amont et en aval d'une station de soudage (25) de la chaîne de fabrication (3) plusieurs emplacements d'arrêt (29, 30; 29a, 30a) l'un à côté de l'autre transversalement à la chaîne de fabrication (3) à chaque fois pour un chariot latéral (11, 12) et **en ce que**, pour l'échange de chariots latéraux (11, 12), sur chaque côté de la chaîne de fabrication (3), une voie de transport (31, 31a) placée derrière les robots de soudage (26, 27, 28) de la station de soudage (25) mène des emplacements d'arrêt (29, 30 ; 29a, 30a) situés en amont de la station de soudage (25) à des emplacements d'arrêt (29b, 30b; 29c, 30c) situés en aval de la station de soudage (25).

8. Chaîne de fabrication selon au moins une des revendications 6 ou 7, **caractérisée en ce qu'**à chaque fois, un robot de soudage (28) d'un côté de la chaîne de fabrication (3) est formé pour s'engager dans la voie de circulation (9, 10) des chariots latéraux (11, 12, 11a, 12a) le long de la chaîne de fabrication (3) entre les supports de galets (5, 6).
